# EUROPÄISCHE PATENTANMELDUNG

(11) **EP 3 715 824 A1**
(43) Veröffentlichungstag der Anmeldung: **30.09.2020**
(21) Anmeldenummer: 19166085.1
(22) Anmeldetag: 29.03.2019
(51) Int. Cl.: G01N 11/04, G01N 11/02

(54) **VORRICHTUNG UND VERFAHREN ZUR BESTIMMUNG ODER PRÜFUNG EINER THIXOTROPIE-EIGENSCHAFT EINES FLIESSENDEN MATERIALS**

(71) Anmelder: BASF Coatings GmbH, 48165 Münster (DE)
(72) Erfinder: Bombrowski, Martin, 48165 Münster (DE)
(74) Vertreter: Eisenführ Speiser

(57) **Zusammenfassung**

Die vorliegende Erfindung betrifft das Gebiet einer Bestimmung und/oder Prüfung von Materialeigenschaften. Um eine Bestimmung insbesondere einer zeitabhängigen Viskositätsänderung bei Scherbelastung mit einer geringeren Fehlerbehaftung zu erlauben, wird eine Vorrichtung, mit einer Leitung zur Aufnahme des Materials, wobei die Leitung einen ersten Leitungsabschnitt und einen zweiten Leitungsabschnitt stromabwärts zum ersten Leitungsabschnitt aufweist, derart, dass es bei fließenden Material zwischen dem ersten Leitungsabschnitt und dem zweiten Leitungsabschnitt zu einer Änderung einer Schergeschwindigkeit des Materials in der Leitung gegenüber einer Wandung der Leitung kommt, und mehreren Druckerfassungseinheiten vorgeschlagen, die zum Erfassen eines jeweiligen Druckwertes des Materials in der Leitung an mehreren Stellen im zweiten Leitungsabschnitt und/oder zum Erfassen jeweiliger Druckdifferenzwerte des Materials in der Leitung zwischen mehreren Stellen im zweiten Leitungsabschnitt ausgestaltet sind, wobei die Druckerfassungseinheiten ausgestaltet sind, die jeweils erfassten Druckwerte und/oder Druckdifferenzwerte an eine Recheneinheit zu geben, die zum Bestimmen der Thixotropie-Eigenschaft anhand der erfassten Druckwerte und/oder Druckdifferenzwerte und/oder zum Prüfen der Thixotropie-Eigenschaft auf Basis eines Abgleichs der erfassten Druckwerte und/oder Druckdifferenzwerte mit aufgrund einer vorbestimmten Thixotropie-Eigenschaft erwarteten Werten ausgestaltet ist.

## Beschreibung

Die vorliegende Erfindung betrifft das Gebiet einer Bestimmung und/oder Prüfung von Materialeigenschaften und insbesondere die Eigenschaft einer Thixotropie.

Es ist häufig zu beobachten, dass Beschichtungsprodukte eine zeitabhängige Änderung ihrer Viskosität zeigen, nachdem bzw. wenn sie eine Scherbelastung erfahren haben. Wenn dies bei einer konstanten Schergeschwindigkeit auftrifft, wird das Phänomen "Thixotropie" genannt. Im Fall einer unvollständigen Rückkehr der Viskosität zum Ausgangswert wird auch von einer "partiellen Thixotropie" gesprochen.

Eine Charakterisierung der Thixotropie-Eigenschaft(en) ist bei Beschichtungen und Harzen von besonderem Interesse, da die Thixotropie - insbesondere bei Beschichtungsmaterialien - das Aufbringungsverhaltung, vor allem hinsichtlich der einander gegenläufigen Effekte des Ablaufens und Verlaufens, beeinflusst (wenn nicht sogar bestimmt) und Auswirkungen auf die Produktstabilität hat.

In bekannten Ansätzen wird die Thixotropie mit einem standardisierten rheologischen Testverfahren (bisweilen als "Sprungversuch" bezeichnet) unter Verwendung eines herkömmlichen Rheometers charakterisiert. Diese Messungen erfolgen nicht im eigentlichen Produktions- oder Behandlungsverfahren und machen es erforderlich, dass dem eigentlichen Prozess Material zur Verprobung entnommen wird. Eine derartige Probe kann gelagert werden, wobei die Probe nach einem Transport ins Rheologie-Labor erneut gelagert werden kann. Für das Testverfahren (und im Rahmen einer allgemeinen Handhabung im Labor) können (und sind im Allgemeinen) weitere Manipulationen, etwa Rühren oder Quetschen, vorgesehen sein, bevor die eigentlich vorgesehene rheologische Messung durchgeführt wird. Diese Schritte von der Probenentnahme bis zur eigentlichen Messung können die interne Struktur des Materials beeinflussen und die rheologische Historie der Probe verändern. Zudem können beispielsweise eine Alterung, eine Sedimentierung von Pigmenten, eine Entschäumung und/oder ein Entweichen von Lösungsmitteln auftreten. Auch dies kann Einfluss auf die rheologischen Messergebnisse haben.

Angesichts des Obigen kann es dazu kommen, dass die erhaltenen Messergebnisse das Material im Prozess selbst gar nicht mehr oder allenfalls unzureichend beschreiben, selbst wenn eine kalkulatorische Berücksichtigung (etwa im Sinne einer Abschätzung bekannter Einflüsse) versucht wird.

Die Nutzung von möglicherweise völlig unzutreffenden Informationen zur Prozesssteuerung kann zu falschen Handlungen und Maßnahmen führen, mit den entsprechenden Konsequenzen für den Prozess.

Neben Herstellprozessen ergibt sich auch beispielsweise bei Stabilitätstest in Kreislaufleitungen die Situation, dass Änderungen im thixotropen Verhalten mit zunehmender Umlaufzahl von Interesse sind. Hier können unzuverlässige Testergebnisse zu falschen Formulierungsschritten führen, die letztlich zusätzliche Tests nötig machen und/oder zu längeren Antwortzeiten, etwa im Fall von Beschwerden durch Abnehmer, führen können.

Zurzeit stehen kommerziell keine Techniken zur Verfügung, die eine verlässliche Charakterisierung zeitabhängiger Änderungen einer Viskosität eines Materials im eigentlichen Prozess erlauben. Herkömmlich werden rheologische Messungen an herkömmlichen Rheometern durchgeführt, wobei die damit verbundene Probennahme, der Transport und die Lagerung der Probe und/oder die Aufbereitung der Probe auf die Probe derart einwirken können, dass die gemessenen Parameter das Material im Prozess nicht oder nur unvollständig beschreiben.

Ein der vorliegenden Erfindung zugrundeliegendes Ziel ist es, einen Ansatz bereitzustellen, mit dem die Nachteile der herkömmlichen Bestimmung überwunden oder zumindest vermindert werden, insbesondere ist es ein Ziel, eine Bestimmung rheologischer Parameter wie die der Thixotropie zu erlauben, die gegenüber den Ergebnissen der herkömmlichen Bestimmung näher an den tatsächlich im Prozess vorliegenden Eigenschaften liegen.

Es ist daher gewünscht, eine Lösung vorzustellen, die eine Bestimmung insbesondere einer zeitabhängigen Viskositätsänderung bei Scherbelastung mit einer geringeren Fehlerbehaftung erlaubt.

Erfindungsgemäß wird nach einem ersten Aspekt eine Vorrichtung zur Bestimmung oder Prüfung einer Thixotropie-Eigenschaft eines fließenden Materials vorgeschlagen, wie sie in Anspruch 1 definiert ist, nämlich mit einer Leitung zur Aufnahme des Materials, wobei die Leitung einen ersten Leitungsabschnitt und einen zweiten Leitungsabschnitt stromabwärts zum ersten Leitungsabschnitt aufweist, derart, dass es bei fließenden Material zwischen dem ersten Leitungsabschnitt und dem zweiten Leitungsabschnitt zu einer Änderung einer Schergeschwindigkeit des Materials in der Leitung gegenüber einer Wandung der Leitung kommt, und mehreren Druckerfassungseinheiten, die zum Erfassen eines jeweiligen Druckwertes des Materials in der Leitung an mehreren Stellen im zweiten Leitungsabschnitt und/oder zum Erfassen jeweiliger Druckdifferenzwerte des Materials in der Leitung zwischen mehreren Stellen im zweiten Leitungsabschnitt ausgestaltet sind, wobei die Druckerfassungseinheiten ausgestaltet sind, die jeweils erfassten Druckwerte und/oder Druckdifferenzwerte an eine Recheneinheit zu geben, die zum Bestimmen der Thixotropie-Eigenschaft anhand der erfassten Druckwerte und/oder Druckdifferenzwerte und/oder zum Prüfen der Thixotropie-Eigenschaft auf Basis eines Abgleichs der erfassten Druckwerte und/oder Druckdifferenzwerte mit aufgrund einer vorbestimmten Thixotropie-Eigenschaft erwarteten Werten ausgestaltet ist.

Erfindungsgemäß wird nach einem zweiten Aspekt ein Verfahren zur Bestimmung oder Prüfung einer Thixotropie-Eigenschaft eines fließenden Materials innerhalb einer Leitung vorgeschlagen, wie es in Anspruch 9 definiert ist, nämlich, mit den Schritten des Bewirkens einer Änderung einer Schergeschwindigkeit des Materials in der Leitung gegenüber einer Wandung der Leitung, des Erfassen eines jeweiligen Druckwertes des Materials in der Leitung an mehreren Stellen stromabwärts des Bereichs, in dem die Schergeschwindigkeitsänderung bewirkt wurde, und/oder des Erfassens jeweiliger Druckdifferenzwerte des Materials zwischen mehreren Stellen in der Leitung stromabwärts des Bereichs, in dem die Schergeschwindigkeitsänderung bewirkt wurde, und des Bestimmens der Thixotropie-Eigenschaft anhand der erfassten Druckwerte und/oder Druckdifferenzwerte oder des Prüfens der Thixotropie-Eigenschaft auf Basis eines Abgleichs der erfassten Druckwerte und/oder Druckdifferenzwerte mit aufgrund einer vorbestimmten Thixotropie-Eigenschaft erwarteten Werten.

Es wurde erkannt, dass ein Druckabfall in einer Leitung in einem Zusammenhang mit der Viskosität des fließenden Materials steht, wobei durch eine innere Reibung im fließenden Material selbst der Druckabfall bewirkt wird.

Solange die Leitung keine Materialverluste aufweist, liegt notwendigerweise ein konstanter Volumenstrom vor, so dass etwa in einem Leitungsteil mit geringem Querschnitt eine höhere Fließgeschwindigkeit vorliegt, während im einem Leitungsteil mit großem Querschnitt eine geringere Fließgeschwindigkeit vorliegt.

Angesichts der Reibung zwischen fließenden Material und Wandung der Leitung ergibt sich damit im Bereich mit geringerem Querschnitt eine im Vergleich zum Bereich mit größerem Querschnitt höhere Schwergeschwindigkeit.

Es wurde zudem erkannt, dass das Fließen jenseits des Schergeschwindigkeitsübergangs, soweit es über eine ausreichende Strecke (z.B. mehrere Meter) bzw. Zeit (z.B. mehrere Minuten) beobachtet wird, erlaubt, die zeitliche Entwicklung der Viskosität zu bestimmen. Die beobachtete Fließstrecke hängt hierbei über die Fließgeschwindigkeit mit der Zeit zusammen.

Es ist im Rahmen der Erfindung nicht notwendig, dass der vollständige Viskositätsverlauf über die Zeit bestimmt oder gemessen wird, da es im Allgemeinen ausreichend ist, eine geeignete Anzahl von Messpunkten (entlang der Leitung) vorzusehen, aus deren Messwerten sich dann in geeigneter Weise der Viskositätsverlauf, soweit er für die Bestimmung bzw. Prüfung der Viskosität und damit letztlich der Thixotropie-Eigenschaft nötig ist, ableiten lässt. Hierbei ist der Fachmann in der Lage zumindest anhand eines grob erwarteten Verlaufs die Zahl der vorteilhafterweise vorzusehenden Druckbestimmungspunkte und deren Positionierung vorzusehen.

Die vorliegende Erfindung bietet ein Potential für ein besseres Verständnis bzw. eine bessere Kenntnis zu Prozessfluktuationen und ermöglicht damit eine verlässlichere und rationalere Prozessführung. Zudem ist bei einem Einsatz der Erfindung die Notwendigkeit genommen, die herkömmliche Bestimmung mit dem entsprechenden Aufwand an Material, Kosten und Zeit fortzusetzen. Durch eine Einbindung in einen Prozess selbst ergibt sich ferner Potential zur Einsparung von Produktionszeit und/oder zur Verbesserung einer Prozesseffizienz.

Die vorliegende Erfindung kann insbesondere im Rahmen einer Prozessqualitätssteuerung in Fällen vorteilhaft eingesetzt werden, in denen eine zeitabhängige Kenntnis einer Viskosität von Interesse oder Bedeutung ist. Auch bei der Harzproduktion mit thixotropierenden Stoffen und in der Stabilitätssteuerung bei Ringleitungen kann die Erfindung vorteilhafterweise genutzt werden.

Im Rahmen der Erfindung kann vorgesehen sein, dass Druckwerte des Materials, etwa im Sinne von absoluten Druckwerten oder auch im Sinne von Differenzen des Drucks im Material gegenüber einer externen Referenz (z.B. Atmosphärendruck) erfasst werden, wobei dann aus diesen Druckwerten der jeweilige Druckabfall aus deren Differenz rechnerisch bestimmt wird, wobei allerdings ergänzend oder alternativ ebenso vorgesehen sein kann, dass die Druckdifferenzen selbst bestimmt werden, also ohne dass ggf. absolute Druckwerte (bzw. Druckwerte relativ zu einer externen Referenz) an den einzelnen Messstellen bestimmt werden müssten.

In einer vorteilhaften Ausgestaltung eines Aspekts der Erfindung umfasst die Vorrichtung auch die Recheneinheit, die zum Bestimmen der Thixotropie-Eigenschaft anhand der erfassten Druckwerte und/oder Druckdifferenzwerte und/oder zum Prüfen der Thixotropie-Eigenschaft auf Basis eines Abgleichs der erfassten Druckwerte und/oder Druckdifferenzwerte mit aufgrund einer vorbestimmten Thixotropie-Eigenschaft erwarteten Werten ausgestaltet ist.

Die Vorrichtung, sofern sie nicht bereits mit der Recheneinheit versehen ist, kann beispielsweise bei einer geeigneten Speicherung der erfassten Daten eine spätere Bestimmung oder Prüfung erlauben. Zudem kann vorgesehen sein, dass sich die Vorrichtung mit anderen vergleichbaren Vorrichtungen eine zentrale Recheneinheit gewissermaßen "teilt", ohne dass für jede erfindungsgemäße Kombination von Leitung und Druckerfassungseinheiten eine eigene Recheneinheit vorgesehen wäre.

In einer anderen vorteilhaften Ausgestaltung eines Aspekts der Erfindung ist eine weitere Druckerfassungseinheit vorgesehen, die zum Erfassen eines Druckwertes des Materials in der Leitung im ersten Leitungsabschnitt und/oder zum Erfassen eines Druckdifferenzwertes zwischen einer Stelle im ersten Leitungsabschnitt und einer Stelle im ersten oder zweiten Leitungsabschnitt ausgestaltet ist.

Mit einer Bestimmung eines Drucks bzw. einer Druckdifferenz im ersten Leitungsabschnitt kann ein (weiterer) Referenzwert erhalten werden, der Rückschlüsse auf die Druckverhältnisse am Beginn des zweiten Leitungsabschnitts erlaubt. Vorzugsweise ist die weitere Druckerfassungseinheit derart in der Nähe des Endes des ersten Leitungsabschnitts angeordnet, dass der Druckabfall bis zum Ende (in Richtung des zweiten Leitungsabschnittes) des ersten Leitungsabschnittes vernachlässigbar ist, insbesondere kleiner ist als 10 % des Druckabfalles im ersten Leitungsabschnitt.

In einer anderen vorteilhaften Ausgestaltung eines Aspekts der Erfindung weist zumindest der zweite Leitungsabschnitt einen konstanten Querschnitt auf.

Bei einer Charakterisierung (Bestimmung) von Materialeigenschaften im Zusammenhang einer Thixotropie ist es vorteilhaft, wenn nicht zusätzliche Variablen durch eine veränderliche (im Sinne einer nicht-konstanten) Strömungsgeschwindigkeit eingebracht werden, da hier die Strömungsgeschwindigkeit bzw. die Schergeschwindigkeit Einfluss auf die Fließeigenschaften hat.

Soll andererseits ein Vorhandensein eines angenommenen Fließverhaltens im Sinne einer Prüfung auf eine an sich bekannte Thixotropie-Eigenschaft bestimmt werden, so kann dies im Allgemeinen auch bei einer nicht-konstanten Strömungsgeschwindigkeit anhand praktischer Erfahrung oder theoretischer Überlegungen ohne allzu großen Aufwand erfolgen, wobei allerdings auch hier keine beliebig starke Varianz des Querschnitts vorgesehen sein sollte, da ansonsten ein zu großer Einfluss auf die Fließeigenschaften auftreten kann.

In einer anderen vorteilhaften Ausgestaltung eines Aspekts der Erfindung weist der erste Leitungsabschnitt eine andere Leitungsquerschnittsfläche als der zweite Leitungsabschnitt auf, wobei der erste Leitungsabschnitt vorzugsweise eine kleinere Leitungsquerschnittsfläche aufweist.

Wenn der zweite Leitungsabschnitt eine größere Leitungsquerschnittsfläche aufweist, ist damit in diesem Abschnitt die Fließgeschwindigkeit gegenüber dem ersten Leitungsabschnitt reduziert, so dass bei einer geeigneten Betrachtungszeit, die sich letztlich mit der Fließgeschwindigkeit in eine Länge des Leitungsabschnitts übersetzen lässt, eine geringere Längenausdehnung der Vorrichtung ergibt.

In einer anderen vorteilhaften Ausgestaltung eines Aspekts der Erfindung sind der Querschnitt des ersten Leitungsabschnitts und des zweiten Leitungsabschnitts jeweils rechteckig.

Es ist nicht zwingend notwendig (wenn auch bevorzugt), dass die Leitungsabschnitte in ihrer Form (unabhängig von der Größe) ähnlich oder entsprechend sind. Zudem können auch andere Querschnittsformen vorgesehen sein, beispielsweise runde oder anderweitig symmetrische Formen, wobei auch asymmetrische Formen möglich sind.

In einer anderen vorteilhaften Ausgestaltung eines Aspekts der Erfindung weist die Leitung zwischen dem ersten Leitungsabschnitt und dem zweiten Leitungsabschnitt einen Übergangsabschnitt auf, dessen Länge vorzugsweise kleiner als der Leitungsdurchmesser des ersten Leitungsabschnitts ist.

Es wurde gefunden, dass ein derart abrupter Übergang vom ersten auf den zweiten Leitungsabschnitt von Vorteil ist, wobei im Grunde der Übergangsabschnitt auch eine derart verschwindend kurze Ausdehnung aufweisen kann, dass man von einem direkten Übergang vom ersten zum zweiten Leitungsabschnitt sprechen kann.

In einer anderen vorteilhaften Ausgestaltung eines Aspekts der Erfindung weist der zweite Leitungsabschnitt eine Biegung auf, wobei der Biegungsradius vorzugsweise wenigstens das Dreifache des Leitungsradius des zweiten Leitungsabschnitts beträgt.

Um zu vermeiden, dass die Vorrichtung eine Gesamtabmessung erreicht, die eine Nutzung bei geradlinigem Leitungsverlauf verbieten oder erschweren würde, kann der zweite Leitungsabschnitt gebogen sein, auch mehrfach, wobei für jede der Biegungen jeweils vorzugsweise die obige Beschränkung zutrifft.

Vorzugsweise entsprechen der erste Leitungsabschnitt und der zweite Leitungsabschnitt in anderen Aspekten, die für den Materialfluss bzw. den Prozess von Bedeutung sind, einander und anderen Leitungsteilen, die vor oder hinter der Vorrichtung vorgesehen sind. So kann etwa die Leitung der Vorrichtung temperaturgesteuert sein. Da die Viskosität temperaturabhängig ist, werden eine Temperierung der Messvorichtung (einschließlich der Leitungen) oder eine Nutzung der Messvorrichtung in einer temperierten Umgebung bevorzugt. Insbesondere wird bevorzugt, dass die Temperatur des zu prüfenden Materials im für die Prüfung bzw. Bestimmung relevanten Leitungsbereich um nicht mehr als 2,5°C schwankt, vorzugweise um nicht mehr als 1°C,

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration eines ersten Ausführungsbeispiels der erfindungsgemäßen Vorrichtung, und
- Fig. 2: ein schematisches Ablaufdiagramm eines Ausführungsbeispiels des erfindungsgemäßen Verfahrens.

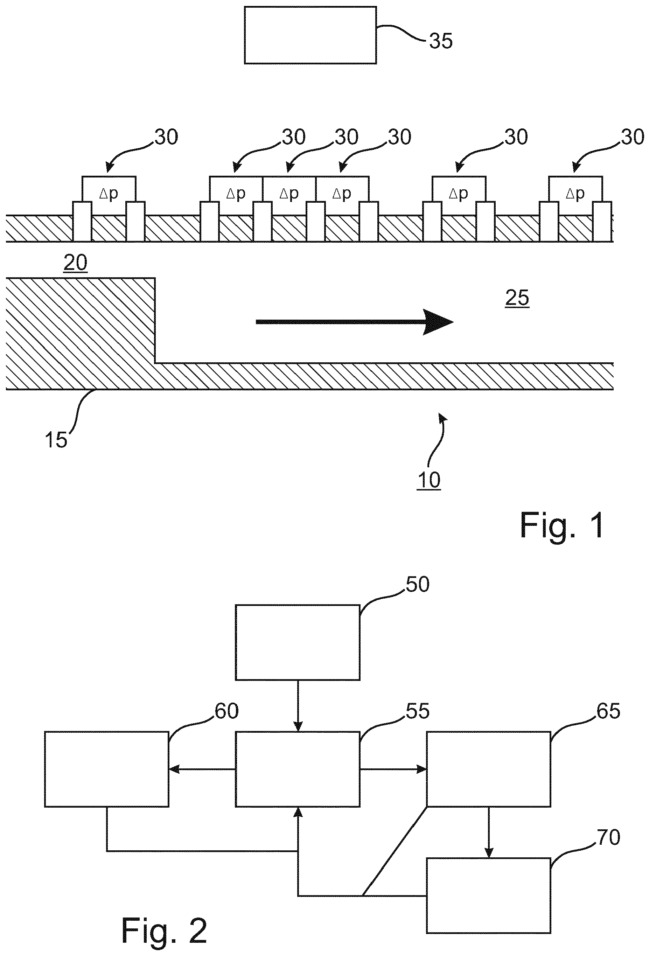

Fig. 1 zeigt eine schematische Darstellung zur Illustration eines ersten Ausführungsbeispiels der erfindungsgemäßen Vorrichtung.

Die Vorrichtung 10 umfasst eine Leitung 15, die wiederum einen ersten Leitungsabschnitt 20 und einen zweiten Leitungsabschnitt 25 umfasst. Der Innendurchmesser des ersten Leitungsabschnitts 20 ist kleiner als der des zweiten Leitungsabschnitts 25, wobei der Übergang zwischen den Leitungsabschnitten 20, 25 praktisch unmittelbar ist, so dass kein signifikanter Übergangsbereich zwischen den Leitungsabschnitten 20, 25 vorliegt.

In der Darstellung von Fig. 1 ist im gezeigten Querschnitt eine Wandung des ersten Leitungsabschnitts 20 bündig mit einer Wandung des zweiten Leitungsabschnitts 25, wobei auch andere Anordnungen möglich ist, insbesondere können die Leitungen koaxial zueinander angeordnet sein, wobei aber auch jede andere relative Anordnung möglich ist.

An dem ersten Leitungsabschnitt 20, in der Nähe des Übergangs zum zweiten Leitungsabschnitt 25, ist eine Druckerfassungseinheit 30 vorgesehen, wobei im weiteren Verlauf (die Fließrichtung des in der Fig. 1 nicht dargestellten Materials geht von links nach rechts) mehrere weitere Druckerfassungseinheiten 30 am zweiten Leitungsabschnitt 25 vorgesehen sind.

Die Druckerfassungseinheiten 30 sind vorliegend jeweils zur Bestimmung eines Druckabfalls ausgestaltet, wobei die jeweilige Position einer Druckerfassungseinheit über die Strömungsgeschwindigkeit (bzw. den Volumenstrom) mit einer Zeit korreliert ist, die ab einem Passieren des fließenden Materials etwa aus dem ersten Leitungsabschnitt 20 in den zweiten Leitungsabschnitt 25 vergangen ist.

Die Druckerfassungseinheiten 30 sind mit einer Recheneinheit 35 gekoppelt, wobei die Kopplung in eine an die jeweiligen Umstände angepassten Weise erfolgen kann. So können die Druckerfassungseinheiten 30 auch drahtlos (über ein geeignetes Kommunikationsprotokoll) mit der Recheneinheit 35 gekoppelt sein. Der Übersichtlichkeit halber sind in Fig. 1 die Kommunikationswege zwischen den Druckerfassungseinheiten 30 und der Recheneinheit 35 (drahtgebunden oder drahtlos) nicht eingezeichnet.

Aufgrund der Änderung des Querschnitts zwischen dem ersten Leitungsabschnitt 20 und dem zweiten Leitungsabschnitt 25 kommt es zu einer Änderung einer Schergeschwindigkeit des fließenden Materials gegenüber der Wandung der Leitung 10. Diese Änderung der Schergeschwindigkeit wirkt sich bei einem thixotropen Material auf dessen Viskosität aus, wobei die Viskosität wiederum in den gesamten Strömungswiderstand eingeht, der für den Druckabfall im Material verantwortlich ist.

Die Messergebnisse der Druckerfassungseinheiten 30 werden an die Recheneinheit 35 gegeben, so dass diese die Thixotropie-Eigenschaft anhand der erfassten Werte bestimmen kann und/oder auf Basis eines Abgleichs der erfassten Druckwerte mit aufgrund einer vorbestimmten Thixotropie-Eigenschaft erwarteten Werten prüfen kann, ob diese vorbestimmte Thixotropie-Eigenschaft im Material vorliegt.

In Implementierungen der Erfindung kann z.B. ein Prozessor ganz oder teilweise die Funktionen der Recheneinheit übernehmen. Abläufe oder Vorgänge wie beispielsweise das Bestimmen und/oder Prüfen können insbesondere als Programmmittel eines Computerprogramms und/oder als spezielle Hardwarekomponenten implementiert werden.

Fig. 2 zeigt ein schematisches Ablaufdiagramm eines Ausführungsbeispiels des erfindungsgemäßen Verfahrens.

Nach einem Schritt 50 des Vorsehens einer Leitung zur Aufnahme des Materials, wobei die Leitung einen ersten Leitungsabschnitt und einen zweiten Leitungsabschnitt stromabwärts zum ersten Leitungsabschnitt aufweist, derart, dass es bei fließenden Material zwischen dem ersten Leitungsabschnitt und dem zweiten Leitungsabschnitt zu einer Änderung einer Schergeschwindigkeit des Materials in der Leitung gegenüber einer Wandung der Leitung kommt, und mehreren Druckerfassungseinheiten, die zum Erfassen eines jeweiligen Druckwertes des Materials in der Leitung an mehreren Stellen im zweiten Leitungsabschnitt und/oder zum Erfassen jeweiliger Druckdifferenzwerte des Materials zwischen mehreren Stellen in der Leitung ausgestaltet sind, wird in Schritt 55 Material durch die Leitung geleitet.

Wie beispielsweise anhand der Darstellung in Fig. 1 erkennbar, ergeben sich mit dem Fließen des Materials durch die Leitung (zumindest nachdem sich eine stabile Fließsituation eingestellt hat), dass verschiedene Aspekte zwar (zum Beispiel) zeitgleich auftreten, aber aus Sicht eines Volumenelements im Strom des Materials nacheinander passiert werden.

Beispielsweise durch eine Querschnittsänderung, wie in Fig. 1 dargestellt, kommt es zu einem Bewirken 60 einer Änderung einer Schergeschwindigkeit des Materials in der Leitung gegenüber einer Wandung der Leitung, während parallel an verschiedenen Stellen der Leitung, insbesondere stromabwärts des Bereichs, in dem die Schergeschwindigkeitsänderung bewirkt wurde, jeweils ein Erfassen 65 eines jeweiligen Druckwertes und/oder Druckdifferenzwerte des Materials in der Leitung vorgesehen. Hierbei werden mindestens drei Druckwerte bzw. mindestens zwei Druckdifferenzwerte bestimnt.

Anhand der anhand der erfassten Werte erfolgt in Schritt 70 ein Bestimmen einer Thixotropie-Eigenschaft des fließenden Materials. Ergänzend oder alternativ kann auch ein Prüfen der Thixotropie-Eigenschaft auf Basis eines Abgleichs der erfassten Druckwerte mit aufgrund einer vorbestimmten Thixotropie-Eigenschaft erwarteten Werten vorgesehen sein.

### Bezugszeichen liste

- 10: Vorrichtung
- 15: Leitung
- 20: erster Leitungsabschnitt
- 25: zweiter Leitungsabschnitt
- 30: Druckerfassungseinheit
- 35: Recheneinheit
- 50: Vorsehen der Vorrichtung
- 55: Leiten von Material durch die Leitung
- 60: Bewirken einer Änderung der Schergeschwindigkeit
- 65: Erfassen von Druckwerten und/oder Druckdifferenzwerten
- 70: Bestimmen einer Thixotropie-Eigenschaft

## Patentansprüche

1. Vorrichtung (10) zur Bestimmung oder Prüfung einer Thixotropie-Eigenschaft eines fließenden Materials, mit
einer Leitung (15) zur Aufnahme des Materials, wobei die Leitung (15) einen ersten Leitungsabschnitt (20) und einen zweiten Leitungsabschnitt (25) stromabwärts zum ersten Leitungsabschnitt (20) aufweist, derart, dass es bei fließenden Material zwischen dem ersten Leitungsabschnitt (20) und dem zweiten Leitungsabschnitt (25) zu einer Änderung einer Schergeschwindigkeit des Materials in der Leitung (15) gegenüber einer Wandung der Leitung (15) kommt, und
mehreren Druckerfassungseinheiten (30), die zum Erfassen eines jeweiligen Druckwertes des Materials in der Leitung (15) an mehreren Stellen im zweiten Leitungsabschnitt (25) und/oder zum Erfassen jeweiliger Druckdifferenzwerte des Materials in der Leitung (15) zwischen mehreren Stellen im zweiten Leitungsabschnitt (25) ausgestaltet sind,
wobei die Druckerfassungseinheiten (30) ausgestaltet sind, die jeweils erfassten Druckwerte und/oder Druckdifferenzwerte an eine Recheneinheit (35) zu geben, die zum Bestimmen der Thixotropie-Eigenschaft anhand der erfassten Druckwerte und/oder Druckdifferenzwerte und/oder zum Prüfen der Thixotropie-Eigenschaft auf Basis eines Abgleichs der erfassten Druckwerte und/oder Druckdifferenzwerte mit aufgrund einer vorbestimmten Thixotropie-Eigenschaft erwarteten Werten ausgestaltet ist.

2. Vorrichtung (10) nach Anspruch 1, mit
der Recheneinheit (35), die zum Bestimmen der Thixotropie-Eigenschaft anhand der erfassten Druckwerte und/oder Druckdifferenzwerte und/oder zum Prüfen der Thixotropie-Eigenschaft auf Basis eines Abgleichs der erfassten Druckwerte und/oder Druckdifferenzwerte mit aufgrund einer vorbestimmten Thixotropie-Eigenschaft erwarteten Werten ausgestaltet ist.

3. Vorrichtung (10) nach einem der vorstehenden Ansprüche, mit
einer weiteren Druckerfassungseinheit (30), die zum Erfassen eines Druckwertes des Materials in der Leitung (15) im ersten Leitungsabschnitt (20) und/oder zum Erfassen eines Druckdifferenzwertes zwischen einer Stelle im ersten Leitungsabschnitt (20) und einer Stelle im ersten oder zweiten Leitungsabschnitt (25) ausgestaltet ist.

4. Vorrichtung (10) nach einem der vorstehenden Ansprüche, wobei
der zweite Leitungsabschnitt (25) einen konstanten Querschnitt aufweist.

5. Vorrichtung (10) nach einem der vorstehenden Ansprüche, wobei
der erste Leitungsabschnitt (20) eine andere Leitungsquerschnittsfläche als der zweite Leitungsabschnitt (25) aufweist, wobei der erste Leitungsabschnitt (20) vorzugsweise eine kleinere Leitungsquerschnittsfläche aufweist.

6. Vorrichtung (10) nach einem der vorstehenden Ansprüche, wobei
der Querschnitt des ersten Leitungsabschnitts (20) und des zweiten Leitungsabschnitts (25) jeweils rechteckig sind.

7. Vorrichtung (10) nach einem der vorstehenden Ansprüche, wobei
die Leitung (15) zwischen dem ersten Leitungsabschnitt (20) und dem zweiten Leitungsabschnitt (25) einen Übergangsabschnitt aufweist, dessen Länge vorzugsweise kleiner als der Leitungsdurchmesser des ersten Leitungsabschnitts (20) ist.

8. Vorrichtung (10) nach einem der vorstehenden Ansprüche, wobei
der zweite Leitungsabschnitt (25) eine Biegung aufweist, wobei der Biegungsradius vorzugsweise wenigstens das Dreifache des Leitungsradius des zweiten Leitungsabschnitts (25) beträgt.

9. Verfahren zur Bestimmung oder Prüfung einer Thixotropie-Eigenschaft eines fließenden Materials innerhalb einer Leitung (15), mit den Schritten:
Bewirken (60) einer Änderung einer Schergeschwindigkeit des Materials in der Leitung (15) gegenüber einer Wandung der Leitung (15),
Erfassen (65) eines jeweiligen Druckwertes des Materials in der Leitung (15) an mehreren Stellen stromabwärts des Bereichs, in dem die Schergeschwindigkeitsänderung bewirkt wurde, und/oder Erfassen (65) jeweiliger Druckdifferenzwerte des Materials zwischen mehreren Stellen in der Leitung (15) stromabwärts des Bereichs, in dem die Schergeschwindigkeitsänderung bewirkt wurde, und
Bestimmen (70) der Thixotropie-Eigenschaft anhand der erfassten Druckwerte und/oder Druckdifferenzwerte oder Prüfen der Thixotropie-Eigenschaft auf Basis eines Abgleichs der erfassten Druckwerte und/oder Druckdifferenzwerte mit aufgrund einer vorbestimmten Thixotropie-Eigenschaft erwarteten Werten.
